**Europäisches Patentamt**

**European Patent Office**

**Office européen des brevets**

(19)

(11) **EP 1 033 582 A1**

(12) **EUROPEAN PATENT APPLICATION**

| | |
|---|---|
| (43) Date of publication:<br>**06.09.2000 Bulletin 2000/36** | (51) Int Cl.⁷: **G01S 5/12**, H04B 7/185,<br>G01S 5/14, G01S 5/00 |

(21) Application number: **99301631.0**

(22) Date of filing: **04.03.1999**

| | |
|---|---|
| (84) Designated Contracting States:<br>**AT BE CH CY DE DK ES FI FR GB GR IE IT LI LU<br>MC NL PT SE**<br>Designated Extension States:<br>**AL LT LV MK RO SI** | (72) Inventors:<br>• **Grayson, Mark**<br>  **London W4 2QT (GB)**<br>• **Le-Goff, Tania**<br>  **London, W11 4SL (GB)** |
| (71) Applicant: **ICO Services Ltd.**<br>**London W6 9BN (GB)** | (74) Representative: **Geary, Stuart Lloyd et al**<br>**Venner, Shipley & Co.,**<br>**20 Little Britain**<br>**London EC1A 7DH (GB)** |

(54) **Mobile station position determination in a satellite mobile telephone system**

(57)     A mobile station (4a) in a satellite mobile telephone system receives propagation information such as propagation time and doppler shift from one or more satellites (3a, 3b). The information received defines two curves on the earth's surface. The mobile station (4a) determines the intersections of these curves and uses this information to determine its position.

**EP 1 033 582 A1**

**Description**

The present invention relates to position determination for a mobile station in a satellite mobile telephone system.

Various proposals have been made for satellite mobile telephone systems. These include the Inmarsat-M system, the IRIDIUM™ system described in EP-A-0365885, the ICO™ system described in GB-A-2295296 and the ODYSSEY™ system described in EP-A-0510789.

It is often desirable that a mobile station in a satellite mobile telephone system know its own position. It has been proposed to determine the mobile station position in a control portion of the network and transmit it to the mobile station. However, it is desirable to minimise the transmission of system information to mobile stations in order to minimise the power and spectrum use for the communication of control information so that these resources are available for the primary function of the system which is speech communication.

According to the present invention, there is provided a method of determining the position of a mobile station in a satellite mobile telephone system, the method comprising the steps of receiving propagation information from at least one satellite at a mobile station, the propagation information being sufficient to define two intersecting curves on the earth's surface, and processing the propagation information at the mobile station to identify the location of an intersection of said curves for determining the position of the mobile station.

In one form, the propagation information is received from one satellite and comprises propagation time data and doppler shift data for the path between the satellite and the mobile station. In a preferred embodiment of this form, the method comprises the steps of:

(a) calculating A as hereinafter defined according to equation (6a);
(b) calculating B as hereinafter defined according to equation (7a);
(c) calculating the latitude of the mobile station according to equation (8);
(d) calculating values for two possible longitude of the mobile station according to equation (9); and
(e) selecting one of the longitude values in dependence on the cell on which the mobile station is camped being east or west of the satellite's ground track.

In another form, the propagation information comprises propagation time data for the paths between the mobile station and the satellites. In one preferred embodiment of this form, the method comprises the steps of:-

(a) determining vector v as hereinafter defined according to equation (15);
(b) determining the co-ordinates of M as hereinafter defined according to equations (17) and (18);
(c) determining r as hereinafter defined and a pair of co-ordinates for P as hereinafter defined according to equations (21) and (19);

In another preferred method of this form, the method comprises the steps of:-

(a) solving equation (25) for Z as hereinafter defined;
(b) determining X as hereinafter defined and Y as hereinafter defined for P as hereinafter defined from $f(Z)$ as hereinafter defined and $g(Z)$ as hereinafter defined;

Preferably, the two satellite methods include the steps of converting the cartesian co-ordinates of P into longitude and latitude according to equations (22) and (23), and selecting one of the longitude and latitude value pairs produced on the basis of the identity of the cell on which the mobile station is camped. More preferably, the step of determining $T_{p1}$ as hereinafter defined and $T_{p2}$ as hereinafter defined using equation (1) is included.

In the foregoing, the equation numbers refer to the equations so numbered in the following detailed description.

The present invention is also embodied in a mobile station for a satellite mobile telephone system including transmitting means, receiving means and a controller configured for operation in a method according to the present invention. Such configuration will preferably largely comprise programming of the mobile station's controller to process the propagation information.

Conveniently, the propagation information and any other necessary data, e.g. satellite nadir locations, will be transmitted to a mobile station in a broadcast control channel or a control channel associated with the mobile station.

An embodiment of the present invention will now be described, by way of example, with reference to the accompanying drawings, in which:-

Figure 1 illustrates a satellite mobile telephone system;

Figure 2 shows a mobile station;

Figure 3 is a schematic diagram of a satellite access node of the system of Figure 1;

Figure 4 is a data flow diagram for the system of Figure 1;

Figure 5 is a plot of propagation time versus distance from satellite nadir;

Figure 6 is a plot of doppler shift versus distance along satellite ground track from its nadir;

Figure 7 illustrates the geometries of cells served by a satellite;

Figures 8 illustrate a geometry used for determining mobile station position;

Figure 9 is a flowchart illustrating a first method according to the present invention;

Figure 10 illustrates two intersecting planes used for determining mobile station position;

Figure 11 illustrates a geometry used for determining mobile station position;

Figure 12 is a flowchart illustrating a second method according to the present invention; and

Figure 13 is a flowchart illustrating a third method according to the present invention

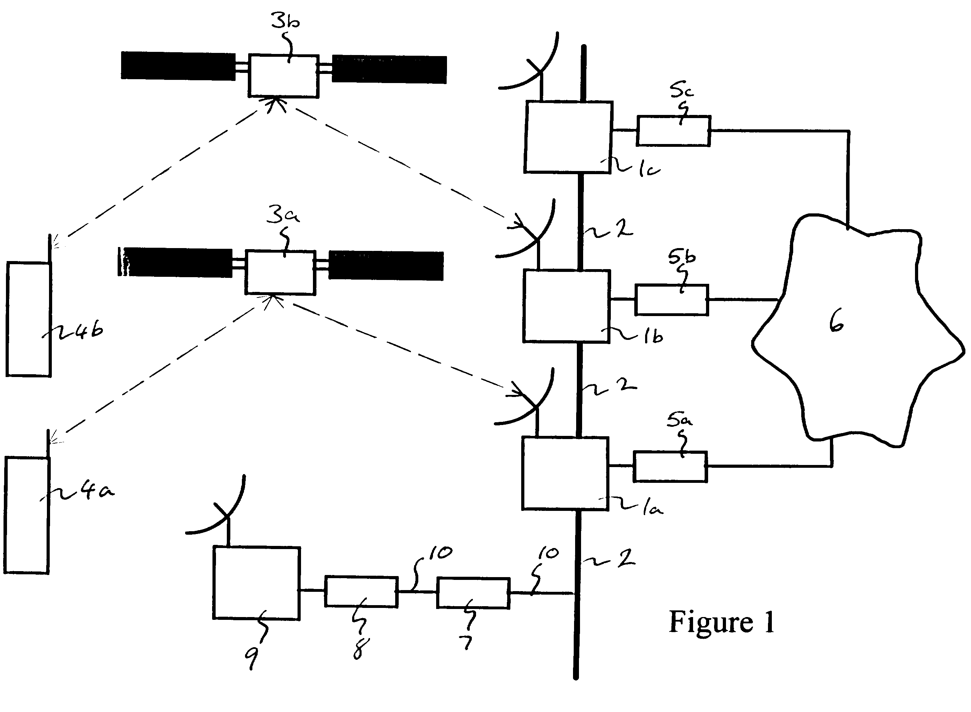

Referring to Figure 1, a satellite mobile telephone system comprises a plurality of satellite access nodes 1a, 1b, 1c interconnected by a high capacity digital network 2 (hereinafter "the backbone network"), a plurality of satellites 3a, 3b, a plurality of a mobile stations 4a, 4b, gateway mobile satellite switching centres 5a, 5b, 5c providing connections between the satellite access nodes 1a, 1b, 1c and other networks 6, a network management centre 7, a satellite control centre 8 and a tracking, telemetry and control station 9. The network management centre 7, the satellite control centre 8 and the tracking, telemetry and control station 9 are interconnected by a lower capacity digital network 10 which is also connected to the backbone network 2. The other networks 6 comprise the public switched telephone network (PSTN), cellular telephone networks and the like.

The satellite control centre 8 and the tracking, telemetry and control station 9 control the operation of the satellites 3a, 3b, for instance setting transmit power levels and transponder input tuning, as directed by the network management centre 7. Telemetry signals from the satellites 3a, 3b are received by the tracking, telemetry and control station 9 and processed by the satellite control centre 8 to ensure that the satellites 3a, 3b are functioning correctly.

The satellites 3a, 3b repeatedly broadcast control information in broadcast control channels (BCCH). A mobile station 4a repeatedly receives and decodes the information in the BCCH broadcast by the satellite 3a, 3b currently serving it.

During a telephone call, a mobile station 4a, 4b communicates with a satellite 3a, 3b via a half duplex channel comprising a downlink channel and an uplink channel. The channels comprise TDMA time slots on frequencies allocated on initiation of the call or re-allocated during a call.

The satellites 3a, 3b are in non-geostationary orbits and comprise generally conventional satellites, such as the known Hughes HS601 model, and may include features as disclosed in GB-A-2288913. Each satellite 3a, 3b is arranged to generate an array of beams covering a footprint beneath the satellite, each beam including a number of different frequency channels and time slots.

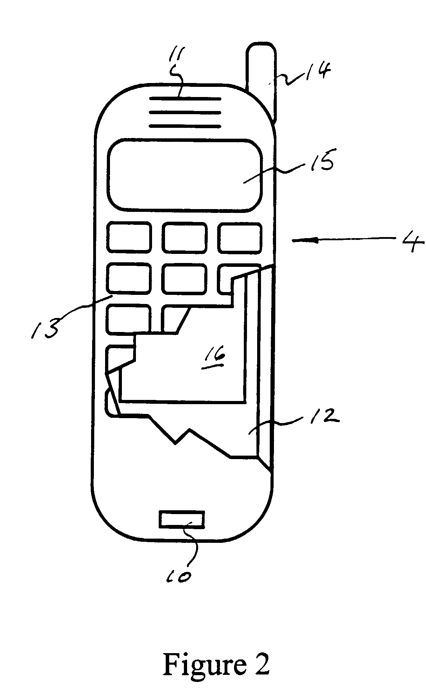

Referring to Figure 2, a mobile station 4 is generally similar to the units presently available for GSM networks and comprises a codec, a controller 16, a microphone 10, a loudspeaker 11, a battery 12, a keypad 13, a radio frequency interface, an antenna 14, a display 15 and subscriber identification module (SIM) smart card.

The codec comprises a low bit-rate coder, which generates a speech bit stream at 3.6 kbits/s, together with a channel coder, which applies error correction codes to the speech bit stream to produce an encoded bit stream at 4.8 kbits/s. The low bit-rate coder is a linear predictive coder. The channel coder uses Viterbi coding. The codec also comprises complementary decoders.

The SIM includes a processor and a non-volatile memory which stores data identifying the subscriber and data for use in encrypted communication.

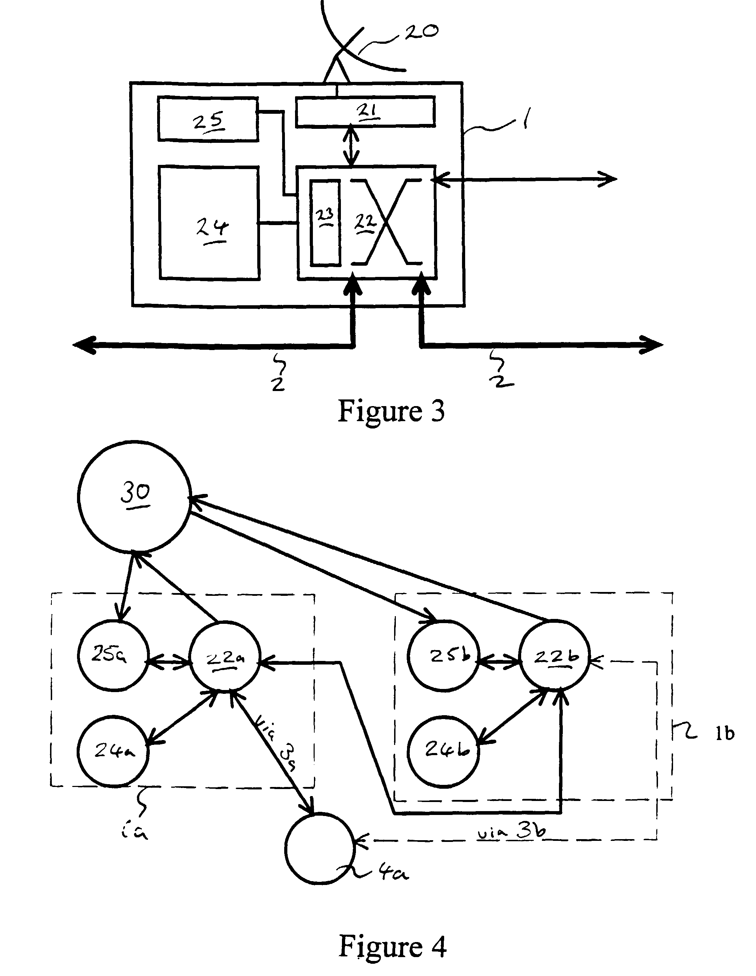

Referring to Figure 3, a satellite access node 1 comprises a dish antenna 20 mounted for tracking satellites, transmitter and receiver circuits 21 including amplifiers, multiplexers, demultiplexers and codecs, a visited mobile satellite switching centre 22 including a controller 23, a visitor location register 24 and a voice mail box unit 25. The mobile satellite switching centre 22 is coupled for communications signals to the backbone network 2, to a gateway and to the transmitter and receiver circuits 21. The controller 23 is coupled for data signals to the visitor location register 24 and the voice mail box unit 25 and may also send and receive data signals via the backbone network 2.

The controller 23 responds to addresses on incoming communications signals, from the antenna 20, the gateway and the backbone network 2, by controlling the mobile satellite switching centre 22 to output the communications signals on the appropriate paths to their destinations, i.e. the antenna 20, the gateway or the backbone network 2.

The visitor location register 25 maintains a record of each of the subscribers registered with the satellite access node 1. The voice mail box unit 24 provides storage space for voice mail messages for subscribers.

Referring to Figure 4, a database 30, called the home location register, contains records relating to each mobile station 4a, 4b. The record contains the mobile station's identity (International Mobile Subscriber Identity or IMSI) and the current address of the visitor location register 25a, 25b where the mobile station 4a, 4b is registered. The visitor location register 25a, 25b contains a part copy of the home location register information (e.g. which services are subscribed to), the status of the mobile station (whether it is "local" or "global") the geographical position of the mobile station, the address of home location register where the mobile station is a subscriber (to enable billing and other data to be collected at a single point), the currently active satellite access node with which the mobile station is in communication via a satellite, an individual enciphering key and the address of an associated voice mail box unit location.

The home location register 30 may be located in the network management centre 7 (see Figure 1) or may be distributed among the satellite access nodes 1a, 1b, 1c (see Figure 1) or may be in another network, e.g. when a GSM subscriber roams onto the satellite network.

Referring to Figures 1 to 4, a mobile station 4a may be registered with one of two distinct statuses; "local" in which the mobile station 4a is permitted to communicate only through one local area or part of the satellite system network, and "global", which entitles the mobile station 4a to communicate through any part of the satellite mobile telephone system.

The mobile station 4a performs an automatic registration process (location update), of the kind well known in the art of cellular terrestrial communications, on each occasion when the mobile station 4a is used for an outgoing call, when the mobile station 4a is switched on, periodically whilst the mobile station 4a is operating and when the mobile station 4a has been unpageable for a predetermined period. As is conventional, the location update takes the form of transmitting of a signal identifying the mobile station 4a (e.g. by transmitting its telephone number on a random access channel). The mobile station 4 decides to camp on a particular cell on the basis of measurements of signals on beacon frequencies and the random access channel used is the one associated with the cell on which the mobile station 4 decides to camp.

The transmitted signal is picked up by one of the satellites 3a. From the received random access channel signal, the satellite access node 1a serving the satellite 3a which sets up a dedicated channel for the mobile station 4a. From the random access channel signal, the satellite access node 1a derives the propagation path time and doppler shift and communicates this to the mobile station 4a in an immediate assignment message. The propagation time is actually send as the difference between actual propagation time and a reference propagation time.

The first message sent on the assigned channel by the mobile station 4a is the "initial message" and when this is received the satellite access node 1a, calculation of the mobile station's position using the propagation time and doppler data is triggered. The position of the mobile station 4a is added to the "initial message" which is then passed on to the visitor location register 25a where the mobile station 4a is registered.

At this stage, the visitor location register 25a can be used to confirm that the mobile station 4a has a subscription for service in the area for which it is located or conversely when first registering with the visitor location register 25a to use information provided in the initial message to derive the address of the home location register and to contact the home location register during which a part copy of the home location register information will be transferred to the visitor location register 25a and the data in the home location register which points to the visitor location register 25a is updated. The location of the mobile station 4a is thus stored in the database of the visitor location register 25a.

As the mobile station 4a and the cells move relative to one another, the visitor location register 25a may determine that the mobile station 4a should be handled via another satellite access node 1b. Consequently, the visitor location register record of the mobile station 4a is amended.

When a mobile terminated call is made to the mobile station 4a, it is directed to the visited mobile satellite switching centre 22a at which the mobile station 4a is registered. The visited mobile satellite switching centre 22a causes a paging signal to be sent to the cells where the called mobile station 4a is expected to be, i.e. via the satellites 3a, 3b serving cells covering the mobile station's location. When the mobile station 4a receives the paging signal, it enters into a dialogue with the network to obtain a channel for the call. If the mobile station 4a does not respond to the paging signal, the network will inform the calling party that the mobile station 4a cannot be reached.

When a mobile originating call is to be made, the user of the mobile station 4a enters the number to be dialled and presses a "send" key. The mobile station 4a responds by sending an access request using a random access channel on a dedicated frequency, corresponding to a cell, to the network via one visible satellite 3a, 3b. The satellite access node 1a responds on the basis of the cell from which it receives the access request. The selected satellite access node 1a sends a immediate assignment message using a access grant channel. The immediate assignment message includes the physical parameters of a stand-alone dedicated control channel assigned by the network. The radio link setup is completed using the stand-alone dedicated control channel and then the connection of the call is attempted. On connection of the call, the mobile station 4a is allocated a traffic channel that is then used for the call.

In a satellite mobile telephone system, as described above, where the satellites are in medium earth orbit, allowance must be made by the mobile stations for different propagation times between different locations and a satellite and for doppler shifts due to the motion of a satellite. The communication of this information to a mobile station will now be described.

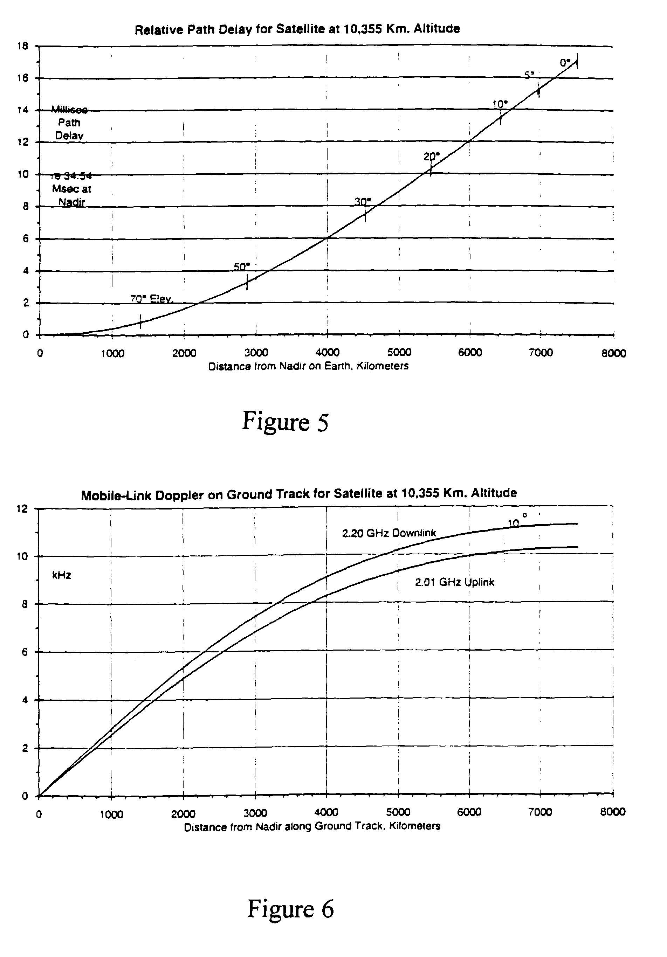

Referring to Figure 5, the propagation time between a mobile station and a satellite is a function of the radial distance between the mobile station and the satellite's nadir and of elevation. The propagation time is independent of the direction of the mobile station from the nadir and can change at up to 5.1μs s$^{-1}$. Contours of constant propagation time, called Z-arcs, are defined. In most cases, there is only one Z-arc crossing a cell. However, the more peripheral cells may be crossed by more than one Z-arc.

Referring to Figure 6, which shows the doppler shift for a rising satellite versus distance of mobile station from the satellite's nadir along the satellite's earth track. The doppler shift for the uplink can change at up to 4.17Hz s$^{-1}$ and that for the downlink can change at up to 4.59Hz s$^{-1}$.

The doppler shift depends on the motion of the satellite relative to the earth's surface. For mobile stations on the projected earth track, and only there, the latitude dependent earth surface velocity and the $\pm 45°$ angle variations in the compass direction of the ground track exactly offset each other. Accordingly, the doppler shift varies only with the distance from the nadir. The maximum doppler shift occurs on the projected ground track at the horizon. For mobile stations located off of the projected ground track, the doppler shift varies with sub-satellite latitude. This variation is less than $\pm 1$kHz at 2.2GHz for a cell and is deterministic and predictable.

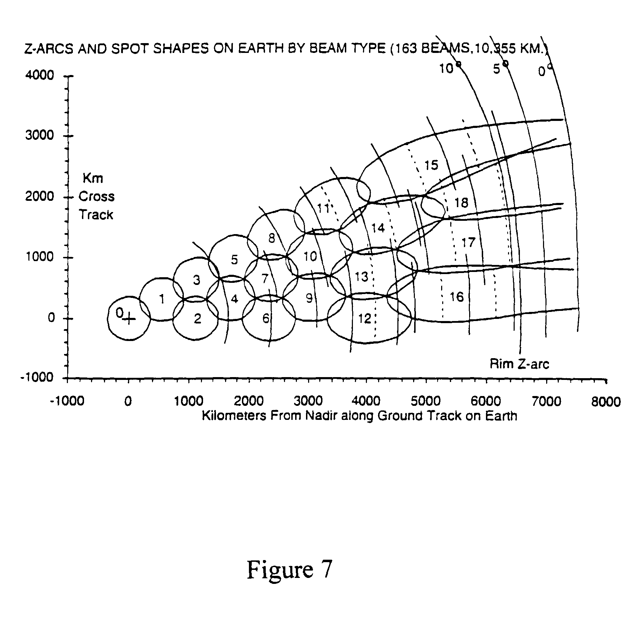

The satellite produces 163 beams, each defining one cell. There are 19 beam or cell types, as shown in Figure 7.

A mobile station acquires system time and frequency information from the broadcast control channel using a combination of energy-profile on broadcast control channel signals, fast Fourier transforms on frequency control channel signals and correlation with synchronisation data in the broadcast control channel signals. The broadcast control channel comprises a burst every 25 timeslots which is transmitted at a higher power level than traffic channel bursts. The frequency control channel comprises two bursts of unmodulated carrier in every 25 timeslots, the frequency control channel bursts immediately following a broadcast control channel burst.

For initial acquisition, the mobile station's receiver tunes between the nominal broadcast control channel frequencies used in the system. The in-phase and quadrature components of received signals are sampled at the symbol frequency and then the instantaneous power is calculated from these samples. The power values are averaged over a moving window having a duration of one burst. A broadcast control channel burst is identified when the average power exceeds a threshold value.

When the threshold value has been exceeded, the identification of a broadcast control channel burst is checked. First, using the timing of the provisionally identified broadcast control channel burst as a reference, a window is opened in the middle of the period expected to be occupied by the frequency control channel bursts and the received signal sampled. A fast Fourier transform of these samples is then calculated. If the frequency control bursts are present, a component at the carrier frequency, allowing for the effects of doppler shift, should appear in the fast Fourier transform result.

If a potential carrier is detected in the fast Fourier transform result, the mobile station local oscillator can be adjusted exactly to the correct frequency. The broadcast control channel signal is then correlated with a synchronisation word to identify a reference point in the broadcast control channel signal.

Once the mobile station has synchronised with the broadcast control channel, it can decode the information contained in the broadcast control channel. This information includes the identity of the current cell, the location of the satellite's nadir, the satellite transmitting the decoded broadcast control channel, the identity of neighbouring cells and the broadcast control channel frequencies for those cells. The mobile station then tries to detect and synchronise with the broadcast control channels of the neighbouring cells.

The mobile station compares the strengths of the broadcast control channels detected and determines that it is in the cell, served by the strongest broadcast control channel signal which, if possible, is not on the satellite's ground track.

Once the mobile station has selected a broadcast control channel, it decodes the broadcast control channel information. The information includes the propagation time or times ($T_0$) between the satellite and the or each Z-arc crossing the cell. The mobile station will generally not be on a Z-arc and allowance must therefore be made for variations in actual propagation time ($T_p$) corresponding to the mobile station's position relative to the closest Z-arc.

After decoding the broadcast control channel information, the mobile station transmits a random access channel burst via the satellite to the satellite access node serving the satellite. The random access channel has a dedicated frequency different from that used for other channel types. On receiving the random access channel burst, the satellite access node calculates the propagation time offset ($T_p - T_0$) from $T_0$. The satellite access node then transmits to the mobile station $2(T_p - T_0)$ in the immediate assignment message in the AGCH (access grant channel).

The mobile station obtains doppler shift information in a similar manner, a reference doppler shift ($f_0$) is decoded from the broadcast control channel and a differential value $2(f_d - f_0)$ is transmitted to the mobile station in the immediate assignment message in the AGCH.

The mobile station now has the following parameters $T_0$, $2(T_p - T_0)$, $f_0$, $2(f_d - f_0)$, the altitude of the satellite, the longitude and latitude of the satellite's nadir together with their respective rates of change which are obtained from the broadcast control channel and the velocity of the satellite (programmed into the mobile station during manufacture).

The mobile station can then solve the equations defining the constant propagation time and constant doppler shift contours on which it is located to produce two values for the intersections of these contours. The intersections will be in cells either side of the satellite's ground track, since the mobile station has selected a cell not on the satellite's ground track, and the correct intersection can be identified from the mobile station's knowledge of the cell's identity and the beam pattern.

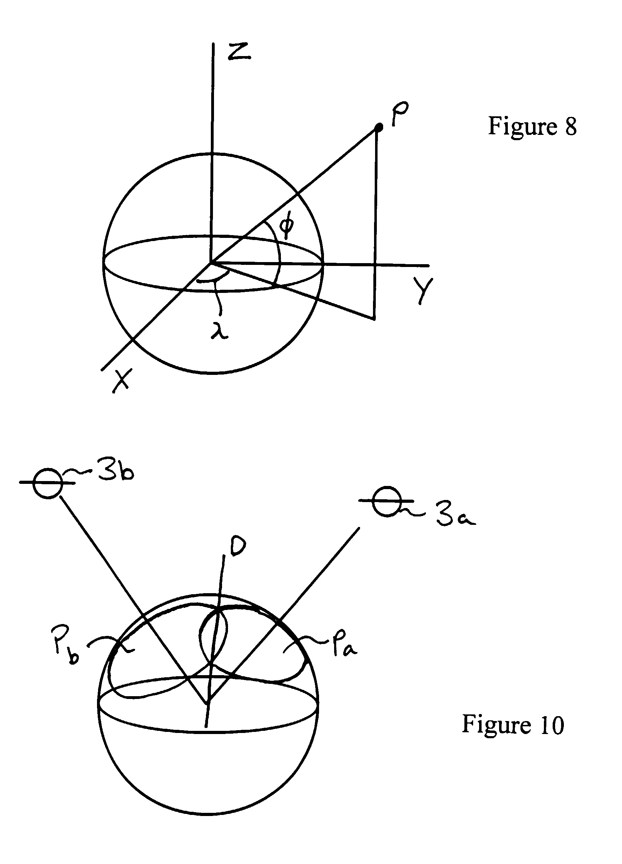

Referring to Figure 8, $T_p$ can be calculated by the mobile station from:-

$$T_p = \frac{\tau}{2} + T_0 \qquad (1)$$

where $\tau = 2(T_p - T_0)$.

$T_p$ is related to the satellite's latitude $\phi_s$ and longitude $\lambda_s$ and the mobile station's latitude $\phi_T$ and longitude $\lambda_T$ by:-

$$T_p = \frac{1}{c} \sqrt{r_s^2 + r_T^2 - 2r_s r_T [\cos\phi_s \cos\phi_T \cos(\lambda_s - \lambda_T) + \sin\phi_s \sin\phi_T]} \qquad (2)$$

The doppler shift $f_d$ can be calculated by the mobile station from:-

$$f_d = \frac{\varepsilon}{2} + f_0 \qquad (3)$$

where $\varepsilon = 2(f_d - f_0)$.

The doppler shift is related to the satellite's latitude $\phi_s$ and longitude $\lambda_s$ and the mobile station's latitude $\phi_T$ and longitude $\lambda_T$ by:-

$$
\begin{aligned}
f_d = \frac{1}{cd} &\Big[ r_s \dot{r}_s + r_T \dot{r}_T - (r_s \dot{r}_T + r_T \dot{r}_s)\big(\cos\phi_s \cos\phi_T \cos(\lambda_s - \lambda_T) + \sin\phi_s \sin\phi_T\big)\Big] \\
&- \frac{r_s r_T}{cd}\left[ \begin{array}{l} -\sin\phi_s \cos\phi_T \cos(\lambda_s - \lambda_T)\dot{\phi}_s - \cos\phi_s \sin\phi_T \cos(\lambda_s - \lambda_T)\dot{\phi}_T \\ \qquad\qquad - \sin\phi_s \cos\phi_T \cos(\lambda_s - \lambda_T)(\dot{\lambda}_s - \dot{\lambda}_T) \end{array} \right] \\
&- \frac{r_s r_T}{cd}\Big[(\cos\phi_s \sin\phi_T)\dot{\phi}_s + (\sin\phi_s \cos\phi_T)\dot{\phi}_T\Big] \qquad (4)
\end{aligned}
$$

where $r_s$ is the distance from the centre of the earth to the satellite, $r_T$ is the distance from the centre of the earth to the mobile station, c is the velocity of light and d is the distance from the mobile station to the satellite, i.e. $cT_p$.

$$\dot{r}_T = \dot{r}_S = 0$$

$$\dot{\phi}_T = \dot{\lambda}_T = 0$$

That is, it is assumed that the altitudes of the mobile station and the satellite are constant and the mobile station is stationary. Consequently:-

$$
f_d = -\frac{r_s r_T}{cd}\left[ \begin{array}{l} -\sin\phi_s \cos\phi_T \cos(\lambda_s - \lambda_T)\dot{\phi}_s - \sin\phi_s \cos\phi_T \cos(\lambda_s - \lambda_T)\dot{\lambda}_s \\ \qquad\qquad + (\cos\phi_s \sin\phi_T)\dot{\phi}_s \end{array} \right] \qquad (5)
$$

From (2) and (5):-

$$A = \frac{d^2 - r_S^2 - r_T^{''}}{-2r_s r_T} \qquad (6a)$$

$$= \cos\phi_S \cos\tilde{\phi}_T \cos(\lambda_S - \tilde{\lambda}_T) + \sin\phi_S \sin\tilde{\phi}_T \qquad (6b)$$

and

$$B = \frac{f_d c d}{-r_S r_T} \qquad (7a)$$

$$= -\sin\phi_S \cos\tilde{\phi}_T \cos(\lambda_S - \tilde{\lambda}_T)\dot{\phi}_S - \sin\phi_S \cos\tilde{\phi}_T \cos(\lambda_S - \tilde{\lambda}_T)\dot{\lambda}_S$$
$$+ (\cos\phi_S \sin\tilde{\phi}_T)\dot{\phi}_S \qquad (7b)$$

From (6) and (7):-

$$\tilde{\phi}_T = \sin^{-1}\left[\frac{A(\dot{\phi}_S + \dot{\lambda}_S)\sin\phi_S + B\cos\phi_S}{\dot{\phi}_S + \dot{\lambda}_S \sin^2\phi_S}\right] \qquad (8)$$

$\tilde{\phi}_T$ is in always in the range $-\pi/2$ to $\pi/2$ and, consequently, no ambiguity arises when determining $\tilde{\phi}_T$ when only $\sin^{-1}$ $\tilde{\phi}_T$ is known. Furthermore, the motion of the satellite is such that $\dot{\phi}_S + \dot{\lambda}_S \sin^2\phi_S$ is never 0.

Once, $\tilde{\phi}_T$ is known, $\tilde{\lambda}_T$ can be obtained from:-

$$\cos(\lambda_S - \tilde{\lambda}_T) = \left(\frac{A - \sin\phi_S \sin\tilde{\phi}_T}{\cos\phi_S \cos\tilde{\phi}_T}\right) \qquad (9)$$

There are two solutions to (9) for $\tilde{\lambda}_T$, namely $\tilde{\lambda}_{T1}$ and $\tilde{\lambda}_{T2}$:-

$$\tilde{\lambda}_{T_1} = \lambda_S - \cos^{-1}\left(\frac{A - \sin\phi_S \sin\tilde{\phi}_T}{\cos\phi_S \cos\tilde{\phi}_T}\right)$$

$$\tilde{\lambda}_{T_2} = \lambda_S + \cos^{-1}\left(\frac{A - \sin\phi_S \sin\tilde{\phi}_T}{\cos\phi_S \cos\tilde{\phi}_T}\right)$$

However, it should be borne in mind that $\cos\phi_S$ is never equal to 0 and if $\cos\tilde{\phi}_T = 0$ then $\phi_T = \pi/2$ or $-\pi/2$ and this would be enough to determine the position of the mobile station.

Accordingly, referring to Figure 9, the mobile station performs the following steps to determine the latitude and longitude of its location:-

(a) calculate $T_p$ according to equation (1) (step s1);
(b) calculate $f_d$ according to equation (3) (step s2);
(c) calculate A according to equation (6a) (step s3);
(d) calculate B according to equation (7a) (step s4);
(e) calculate $\tilde{\phi}_r$ according to equation (8) (step s5);
(f) determine if $\phi_T = \pi/2$ or $-\pi/2$ (step s6) and if not:-

(i) calculate values for $\tilde{\lambda}_{T1}$ and $\tilde{\lambda}_{T2}$ according to equation (9) (step s7); and
(ii) select $\tilde{\lambda}_{T1}$ or $\tilde{\lambda}_{T2}$ in dependence on the serving cell being east or west of the satellite's ground track (step s8); else
(iii) determine sole longitude value (step s9).

The steps may be performed in any order consistent with the required values being available for each step. Steps may also be performed in parallel.

In a second embodiment, in which signals from main and auxiliary satellites 3a, 3b can be received, the mobile station 4a can be considered to be simultaneously in two cells. In this case, the mobile station 4a obtains $T_0$, $2(T_{p1} - T_0)$ values for the cell selected for access. Since the timebase is common at the antenna interfaces of different satellites 3a, 3b, it can measure $(T_{p1}-T_{p2})$ and, using the above information and equation (1) the mobile station 4a can calculate $T_{p2}$.

The mobile station is at the intersection of three spheres. The first sphere has its centre C at the centre of the earth and a radius R equal to the radius of the earth (The earth is assumed to be spherical). The second sphere has its centre $S_a$ at the main satellite 3a and a radius $D_a$ equal to the distance from the main satellite 3a to the mobile station 4. The third sphere has its centre $S_b$ at the auxiliary satellite 3b and a radius $D_b$ equal to the distance from the auxiliary satellite 3b to the mobile station 4.

The mobile station 4 is notified of the latitudes $\phi_{Sa}$, $\phi_{Sb}$ and the longitudes $\lambda_{Sa}$, $\lambda_{Sb}$ of the main and auxiliary satellite's nadirs in the broadcast control channels of the two cells. The latitude and longitude values are converted into earth centred earth fixed cartesian co-ordinates:-

$$\begin{cases} X_{S_a} = (R+H)\cos\phi_{S_a}\cos\lambda_{S_a} \\ Y_{S_a} = (R+H)\cos\phi_{S_a}\sin\lambda_{S_a} \\ Z_{S_a} = (R+H)\sin\phi_{S_a} \end{cases} \quad \begin{cases} X_{S_b} = (R+H)\cos\phi_{S_b}\cos\lambda_{S_b} \\ Y_{S_b} = (R+H)\cos\phi_{S_b}\sin\lambda_{S_b} \\ Z_{S_b} = (R+H)\sin\phi_{S_b} \end{cases} \quad (10)$$

where H is the altitude of the satellites.

The first sphere is defined by:-

$$X^2 + Y^2 + Z^2 = R^2 \quad (11)$$

From (10) and (11), the following simultaneous equations can be obtained:-

$$\begin{cases} X^2 + Y^2 + Z^2 = R^2 \\ -2(XX_{S_a} + YY_{S_a} + ZZ_{S_a}) = D_a^2 - R^2 - (X_{S_a}^2 + Y_{S_a}^2 + Z_{S_a}^2) \\ -2(XX_{S_b} + YY_{S_b} + ZZ_{S_b}) = D_b^2 - R^2 - (X_{S_b}^2 + Y_{S_b}^2 + Z_{S_b}^2) \end{cases} \quad (12)$$

Let:-

$$\begin{cases} C_a = \dfrac{D_a^2 - R^2 - (X_{S_a}^2 + Y_{S_a}^2 + Z_{S_a}^2)}{-2} \\[4mm] C_b = \dfrac{D_b^2 - R^2 - (X_{S_b}^2 + Y_{S_b}^2 + Z_{S_b}^2)}{-2} \end{cases} \qquad (13)$$

Sub (13) into (12):-

$$\begin{cases} X^2 + Y^2 + Z^2 = R^2 \\ XX_{S_a} + YY_{S_a} + ZZ_{S_a} = C_a \\ XX_{S_b} + YY_{S_b} + ZZ_{S_b} = C_b \end{cases} \qquad (14)$$

$XX_{S_a} + YY_{S_a} + ZZ_{S_a} = C_a$ defines a first plane $P_a$ and $XX_{S_b} + YY_{S_b} + ZZ_{Sb} = C_b$ defines a second plane $P_b$ (Figure 10).
$\vec{v}$ is a vector along the line D which is the intersection of the planes $P_a$, $P_b$.

$$\vec{v} = \vec{n}_a \wedge \vec{n}_b = \begin{vmatrix} Y_{S_a} Z_{S_b} - Y_{S_b} Z_{S_a} = v_1 \\ Z_{S_a} X_{S_b} - Z_{S_b} X_{S_a} = v_2 \\ X_{S_a} Y_{S_b} - X_{S_b} Y_{S_a} = v_3 \end{vmatrix} \qquad (15)$$

To determine D, a point and a vector are needed, A point M on the line D can be determined from:-

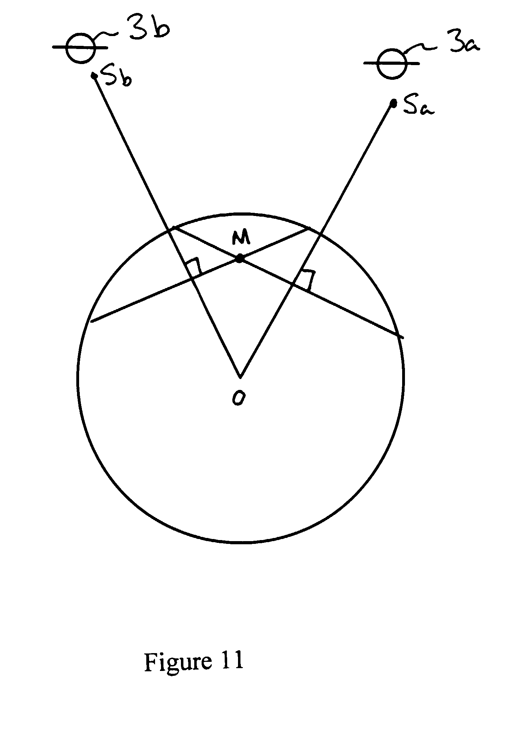

$$\begin{cases} X_{S_s} X + Y_{S_s} Y + Z_{S_s} Z = C_a & M \in P_a \\ X_{S_b} X + Y_{S_b} Y + Z_{S_b} Z = C_b & M \in P_b \\ \alpha X + \beta Y + \gamma Z = 0 & M \in plane\,(O, S_a, S_b) \end{cases} \qquad (16) \quad \text{(Figure 11)}$$

$\alpha$, $\beta$, and $\gamma$ must be determined

$$\vec{n}_3 = \begin{vmatrix} \alpha \\ \beta \\ \gamma \end{vmatrix}$$

is a vector normal to $\vec{OS}_a$ and $\vec{OS}_b$.

$$\text{Then: } \vec{n}_3 = \vec{OS}_a \wedge \vec{OS}_b$$

$$= \begin{vmatrix} X_{S_a} \\ Y_{S_a} \\ Z_{S_a} \end{vmatrix} \wedge \begin{vmatrix} X_{S_b} \\ Y_{S_b} \\ Z_{S_b} \end{vmatrix}$$

$$= \begin{vmatrix} Y_{S_a} Z_{S_b} - Z_{S_a} Y_{S_b} \\ Z_{S_a} X_{S_b} - Z_{S_b} X_{S_a} \\ X_{S_a} Y_{S_b} - Y_{S_a} X_{S_b} \end{vmatrix}$$

Thus:-

$$\begin{cases} \alpha = Y_{S_a} Z_{S_b} - Z_{S_a} Y_{S_b} \\ \beta = Z_{S_a} X_{S_b} - Z_{S_b} X_{S_a} \\ \gamma = X_{S_a} Y_{S_b} - Y_{S_a} X_{S_b} \end{cases} \quad (17)$$

Consequently, $M = (X_M, Y_M, Z_M)$ is the solution of three simultaneous equations with three unknowns:-

$$\begin{cases} X_{S_a} X_M + Y_{S_a} Y_M + Z_{S_a} Z_M = C_a \\ X_{S_b} X_M + Y_{S_b} Y_M + Z_{S_b} Z_M = C_b \\ \alpha X_M + \beta Y_M + \gamma Z_M = 0 \end{cases} \quad (18)$$

A parametrical equation of D is:-

$$P = M + r\vec{v}$$

$$= \begin{cases} X = X_M + rv_1 \\ Y = Y_M + rv_2 \\ Z = Z_M + rv_3 \end{cases} \quad (19)$$

Sub (19) into (11):-

$$(X_M + rv_1)^2 + (Y_M + rv_2)^2 + (Z_M + rv_3)^2 = R^2 \quad (20)$$

Thus:-

$$(v_1^2 + v_2^2 + v_3^2)r^2 + 2(X_M v_1 + Y_M v_2 + Z_M v_3)r + X_M^2 + Y_M^2 + Z_M^2 - R^2 = 0 \quad (21)$$

Equation (21) is a quadratic equation in r and can be solved because $X_M$, $Y_M$ and $Z_M$ are known from (18), $v_1$, $v_2$ and $v_3$ are known from (15) and R is the radius of the earth. Solving (21) gives two values for r ($r_1$ and $r_2$) from which two locations P ($P_1$ and $P_2$) can be obtained from (19).

The cartesian co-ordinates in which $P_1$ and $P_2$ are expressed can then be converted into longitude and latitude values thus:-

$$\lambda_p = \tan^{-1}\left(\frac{Y_P}{X_P}\right) \qquad (22)$$

$$\phi_p = \tan^{-1}\left(\frac{Z_p}{\sqrt{X_P^2 + Y_P^2}}\right) \qquad (23)$$

The mobile station can determine which set of latitude and longitude values apply on the basis of the identity of the cell, served by the main satellite 3a, on which it is camped and knowledge the serving beam.

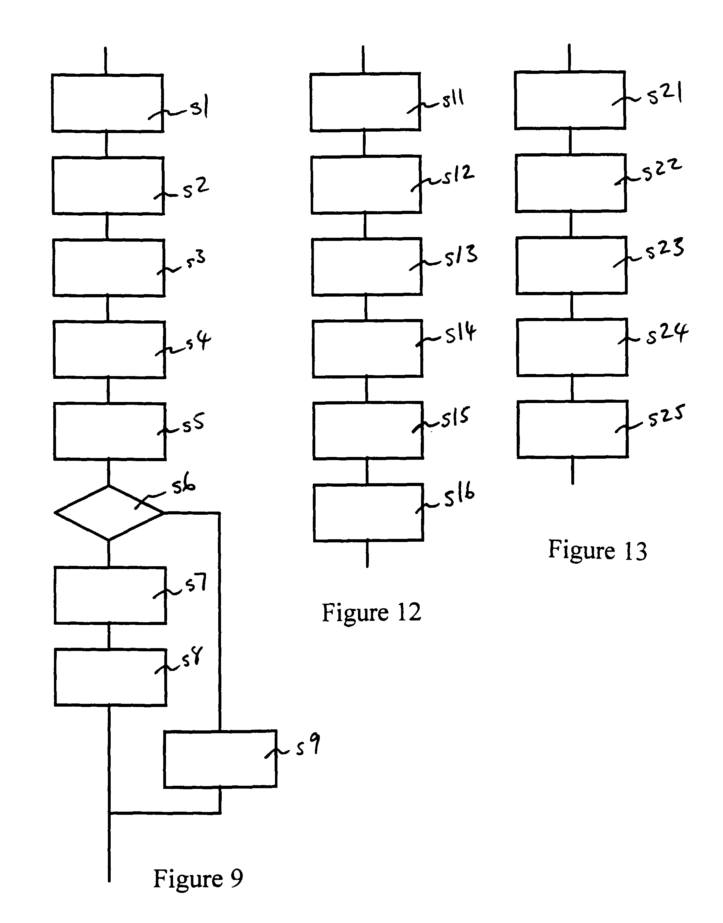

Accordingly, referring to Figure 12, the mobile station performs the following steps to determine the latitude and longitude of its location:-

(a) determine $T_{p1}$ and $T_{p2}$ using equation (1) (step s11);
(b) determine vector v according to equation (15) (step s12);
(c) determine the co-ordinates of M according to equations (17) and (18) (step s13);
(d) determine r and P according to equations (21) and (19) (step s14);
(e) convert cartesian co-ordinates of P into longitude and latitude according to equations (22) and (23) (step s15); and
(f) select one of the longitude and latitude value pairs produced in step s15 on the basis of the identity of the cell on which the mobile station is camped (step s16).

The steps may be performed in any order consistent with the required values being available for each step. Steps may also be performed in parallel.

In a third embodiment, in which signals from main and auxiliary satellites 3a, 3b can be received, the mobile station 4a can be considered to be simultaneously in two cells. In this case, the mobile station 4a obtains $T_0$, $2(T_p - T_0)$ values for both cells and then determines the intersections of the contours of constant propagation delay for both satellites 3a, 3b.

The values for $T_{p1}$ and $T_{p2}$ for the two satellites can be obtained from equation (1).

The mobile station is at the intersection of three spheres. The first sphere has its centre C at the centre of the earth and a radius R equal to the radius of the earth (The earth is assumed to be spherical). The second sphere has its centre $S_a$ at the main satellite 3a and a radius $D_a$ equal to the distance from the main satellite 3a to the mobile station 4. The third sphere has its centre $S_b$ at the auxiliary satellite 3b and a radius $D_b$ equal to the distance from the auxiliary satellite 3b to the mobile station 4.

The mobile station 4 is notified of the latitudes $\phi_{Sa}$, $\phi_{Sb}$ and the longitudes $\lambda_{Sa}$, $\lambda_{Sb}$ of the main and auxiliary satellites in the broadcast control channels of the two cells.

Starting from equations (14), the second and third equations can be used to derive expressions for X and Y as functions of Z (i.e. $X = f(Z)$ and $Y = g(Z)$), on the assumption that the determinate of

$$\begin{vmatrix} X_{S_a} & Y_{S_a} \\ X_{S_b} & Y_{S_b} \end{vmatrix} \neq 0 \qquad (24)$$

(If this determinant equals zero the Y and Z can be expressed as functions of X or X and Z can be expressed as functions of Y.)

$$X = f(Z) = \frac{C_a Y_{S_b} - C_b Y_{S_a} - Z(Z_{S_a} Y_{S_b} - Z_{S_b} Y_{S_a})}{X_{S_a} Y_{S_b} - X_{S_b} Y_{S_a}}$$

$$Y = g(Z) = \frac{C_b X_{S_a} - C_a X_{S_b} - Z(Z_{S_b} X_{S_a} - Z_{S_a} X_{S_b})}{Y_{S_a} X_{S_b} - Y_{S_b} X_{S_a}}$$

Substituting these functions into the first equation at (14):-

$$(f(Z))^2 + (g(Z))^2 + Z^2 = R^2 \qquad\qquad (25)$$

Equation (25) is a quadratic in Z and can be solved to produce two values of Z ($Z_1$ and $Z_2$). From these two sets of co-ordinates for P:

$$P_1 = (X_1 = f(Z_1), Y_1 = g(Z_1), Z_1) \text{ and } P_2 = (X_2 = f(Z_2), Y_2 = g(Z_2), Z_2)$$

The longitude and latitude values for $P_1$ and $P_2$ can then be found using equations (22) and (23).

The mobile station can determine which set of latitude and longitude values apply on the basis of the identity of the cell, served by the main satellite 3a, on which it is camped and knowledge of whether that cell is north or south of the main satellite's ground track.

Accordingly, referring to Figure 13, the mobile station performs the following steps to determine the latitude and longitude of its location:-

(a) determine $T_{p1}$ and $T_{p2}$ using equation (1) (step s21);
(b) solve equation (25) for Z (step s22);
(c) determine X and Y for P from $f(Z)$ and $g(Z)$ (step s23);
(d) convert cartesian co-ordinates of P into longitude and latitude according to equations (22) and (23) (step s24); and
(e) select one of the longitude and latitude value pairs produced in step s24 on the basis of the identity of the cell on which the mobile station is camped (step s25).

It will be appreciated that many modifications may be made to the above-described embodiment while still achieving the same aim. Since the satellites follow predicable orbits, information concerning the position and movement of the nadirs of satellites need not be broadcast to mobile station but may instead be programmed into mobile station, at manufacturer of the mobile station or the user's SIM. The programming may take the form of look up tables or algorithms relating time and satellite identity to nadir position. Thus, *de minimis,* the only information that it is necessary to transmit from a satellite to a mobile station is the propagation data peculiar to the existing positional relationship between the satellite and the mobile station.

**Claims**

1.   A method of determining the position of a mobile station in a satellite mobile telephone system, the method comprising the steps of:

receiving propagation information from at least one satellite at a mobile station, the propagation information being sufficient to define two intersecting curves on the earth's surface; and
processing the propagation information at the mobile station to identify the location of an intersection of said curves for determining the position of the mobile station.

2.   A method according to claim 1, wherein the propagation information is received from one satellite and comprises propagation time data and doppler shift data for the path between the satellite and the mobile station.

**3.** A method according to claim 2, comprising the steps of:-

    (a) calculating A as hereinbefore defined according to equation (6a);
    (f) calculating B as hereinbefore defined according to equation (7a);
    (g) calculating the latitude of the mobile station according to equation (8);
    (h) calculating values for two possible longitude of the mobile station according to equation (9); and
    (i) selecting one of the longitude values in dependence on the cell on which the mobile station is camped being east or west of the satellite's ground track.

**4.** A method according to claim 3, including the steps of calculating satellite to mobile station propagation time ($T_p$) and doppler shift ($f_d$) according to equations (1) and (3) respectively.

**5.** A method according to claim 1, wherein the propagation information is comprises propagation time data for the paths between the mobile station and the satellites.

**6.** A method according to claim 5, comprising the steps of:-

    (a) determining vector v as hereinbefore defined according to equation (15);
    (d) determining the co-ordinates of M as hereinbefore defined according to equations (17) and (18);
    (e) determining r as hereinbefore defined and a pair of co-ordinates for P as hereinbefore defined according to equations (21) and (19);

**7.** A method according to claim 5, including the steps of:-

    (a) solving equation (25) for Z as hereinbefore defined;
    (c) determining X as hereinbefore defined and Y as hereinbefore defined for P as hereinbefore defined from $f$(Z) as hereinbefore defined and $g$(Z) as hereinbefore defined;

**8.** A method according to claim 6 or 7, including the steps of converting the cartesian co-ordinates of P into longitude and latitude according to equations (22) and (23), and selecting one of the longitude and latitude value pairs produced on the basis of the identity of the cell on which the mobile station is camped.

**9.** A method according to claim 6, 7 or 8, including the step of determining $T_{p1}$ as hereinbefore defined and $T_{p2}$ as hereinbefore defined.

**10.** A mobile station for a satellite mobile telephone system including transmitting means, receiving means and a controller configured for operation in a method according to any preceding claim.

Figure 1

Figure 2

Figure 3

Figure 4

Relative Path Delay for Satellite at 10,355 Km. Altitude

Figure 5

Mobile-Link Doppler on Ground Track for Satellite at 10,355 Km. Altitude

Figure 6

Figure 7

Figure 8

Figure 10

Figure 11

s1

s2

s3

s4

s5

s6

s7

s8

s9

Figure 9

s11

s12

s13

s14

s15

s16

Figure 12

s21

s22

s23

s24

s25

Figure 13

## EUROPEAN SEARCH REPORT

European Patent Office

Application Number

EP 99 30 1631

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 601 293 A (MOTOROLA INC) 15 June 1994 (1994-06-15) * column 11, line 10 - line 22 * * column 21, line 12 - column 22, line 22 * | 1,10 | G01S5/12 H04B7/185 G01S5/14 G01S5/00 |
| | --- | | |
| X | WO 98 14796 A (QUALCOMM INC) 9 April 1998 (1998-04-09) * page 4, line 23 - line 31 * * Positioning Method * * claims 1,3,18 * * figure 7 * | 1,5,10 | |
| | --- | | |
| A | EP 0 803 742 A (TRW INC) 29 October 1997 (1997-10-29) * abstract * | 1-10 | |
| | --- | | |
| A | US 5 610 615 A (CHIODINI ALAIN) 11 March 1997 (1997-03-11) * the whole document * | 1-10 | |
| | ----- | | TECHNICAL FIELDS SEARCHED (Int.Cl.7) |
| | | | G01S H04B |

The present search report has been drawn up for all claims

| Place of search | Date of completion of the search | Examiner |
|---|---|---|
| THE HAGUE | 2 August 1999 | Ó Donnabháin, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 99 30 1631

This annex lists the patent family members relating to the patent documents cited in the above-mentioned European search report.
The members are as contained in the European Patent Office EDP file on
The European Patent Office is in no way liable for these particulars which are merely given for the purpose of information.

02-08-1999

| Patent document cited in search report | | Publication date | Patent family member(s) | | Publication date |
|---|---|---|---|---|---|
| EP 0601293 | A | 15-06-1994 | CA | 2106534 A | 08-06-1994 |
| | | | JP | 6281720 A | 07-10-1994 |
| WO 9814796 | A | 09-04-1998 | AU | 5685998 A | 24-04-1998 |
| EP 0803742 | A | 29-10-1997 | CA | 2202827 A | 25-10-1997 |
| | | | JP | 10048310 A | 20-02-1998 |
| US 5610615 | A | 11-03-1997 | FR | 2721459 A | 22-12-1995 |
| | | | AU | 698864 B | 12-11-1998 |
| | | | AU | 2177195 A | 04-01-1996 |
| | | | CA | 2152225 A | 22-12-1995 |
| | | | EP | 0689062 A | 27-12-1995 |
| | | | FI | 953028 A | 22-12-1995 |
| | | | JP | 8050173 A | 20-02-1996 |

EPO FORM P0459

For more details about this annex : see Official Journal of the European Patent Office, No. 12/82